# EUROPEAN PATENT SPECIFICATION

(11) **EP 3 408 135 B1**
(45) Date of publication and mention of the grant of the patent: **13.11.2019**
(21) Application number: 17704404.7
(22) Date of filing: 26.01.2017
(51) Int. Cl.: B60N 3/04, B60H 1/00, F28D 20/02

(54) **HEATING SYSTEM FOR A FLOOR OF A CABIN OF AN INDUSTRIAL VEHICLE**
HEIZSYSTEM FÜR EINEN BODEN EINES FÜHRERRAUMS EINES INDUSTRIEFAHRZEUGS
SYSTÈME DE CHAUFFAGE DESTINÉ À UN PLANCHER D'UNE CABINE D'UN VÉHICULE INDUSTRIEL

(30) Priority: 26.01.2016 IT UB20160267
(43) Date of publication of application: 05.12.2018
(73) Proprietor: Iveco Magirus AG, 89079 Ulm (DE)
(72) Inventor: VARWICK, Manuel, 89077 Ulm (DE); FRIEDRICH, Ursula, 89081 Ulm (DE)
(74) Representative: Bongiovanni, Simone
(86) International application number: PCT/EP2017/051700
(87) International publication number: WO 2017/129709

(56) References cited:
- EP-A1- 0 213 226
- CN-A- 103 640 453
- CN-B- 102 390 235
- DE-A1-102005 016 232
- FR-A1- 2 756 232
- JP-U- S6 256 414
- US-A- 2 062 864
- US-A- 5 927 381
- US-A1- 2011 127 025

## Description

### TECHNICAL FIELD

The present invention relates to a heating system for a floor of a cabin of an industrial vehicle.

### BACKGROUND ART

Heating systems for a floor of industrial cabin have been proposed in the past. For instance, EP0860308 (A1) describes a floor heating system for the cabin of an industrial vehicle comprising: an upper plate realized in good thermal conducting material (eg aluminum) constituting a food rest and a heating fluid pipe located under the upper plate and in contact with the upper plate. A synthetic rubber thermal insulating layer is located under the pipe to prevent heat from the pipe being dissipated downwards.

Other pieces of prior art are: EP-213 226, US 5 927 381 US2011/0127025, US2062864, JPS6256414, De102005016232, CN103640543, CN102390235 and FR2756232.

### DISCLOSURE OF INVENTION

The scope of the present invention is to provide an heating system for a floor of industrial cabin having high efficiency and permitting a good control of the temperature. The above scope is obtained by the present invention that relates to a heating system for a floor of a cabin of an industrial vehicle as defined in claim 1.

### BRIEF DESCRIPTION OF THE DRAWINGS

The invention will be now described with reference to the attached drawings that represent a preferred not limiting example of the invention, wherein:
Figure 1 shows, in a schematic way, a heating system for a floor of a cabin of an industrial vehicle according to the present invention;
Figure 2 shows, in a schematic way, a portion of the heating system of figure 1 according to a first embodiment of the invention;
Figure 3 shows, in a schematic way, a portion of the heating system of figure 1 according to a second embodiment of the invention; and
Figure 4 shows a schema of the feedback control of temperature inside the cabin according to the present invention.

### BEST MODE FOR CARRYING OUT THE INVENTION

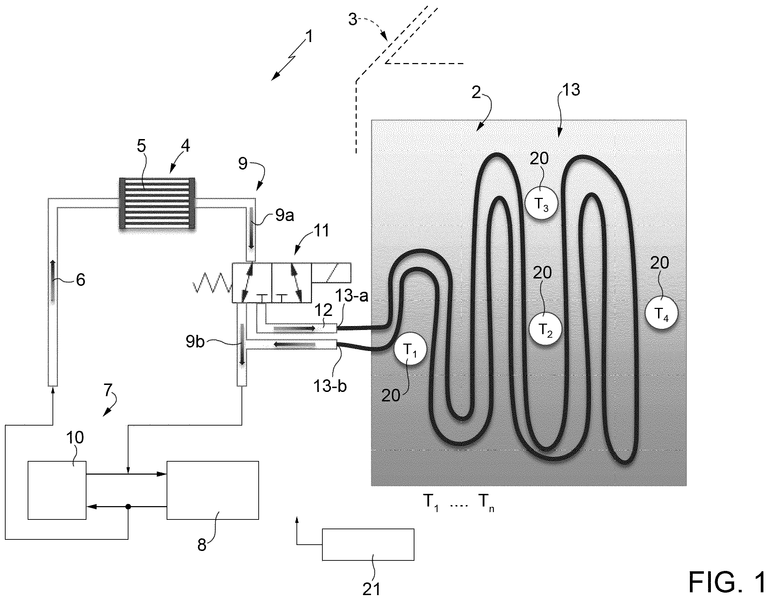

**With reference to** **figure 1**, numeral 1 indicates, an heating system for a floor 2 of a cabin 3 (shown schematically) of an industrial vehicle (not shown), for instance a truck.

The cabin 3 is provided with an internal air heating system 4 (of known kind) where at least one air-fluid heath exchanger 5 receives from at least one supply conduit 6 a heating fluid from the cooling system 7 of the engine 8 (shown schematically). The air-fluid heath exchanger 5 has at least one return conduct 9 towards a return side of the engine cooling system 7. In the schematic example the engine 8 cooperates with a main heath exchanger 10 to cool the engine. The supply conduit 6 may branch off from a supply pipe connecting the engine 8 to the main heat exchanger 10 and the return conduit 9 may converge to return pipe connecting the main heat exchanger 10 to the engine 8.

**According to the present invention, a two-position** control valve 11 is interposed along the return conduct 9 dividing conduct 9 in a first portion 9a and in a second portion 9b separated by the valve 11.

The valve 11 is movable between at least:
i) a first position where fluid flow supplied to the valve 11 from the first portion 9a is fully supplied to the second portion 9b; and
ii) a second position where fluid flow supplied to the valve 11 from the first portion 9a is supplied (totally or partially) to a by-pass conduit 12 that is connected with an input 13-a of a serpentine 13 having an output 13-b for discharging fluid towards the return portion to the engine cooling system 7.

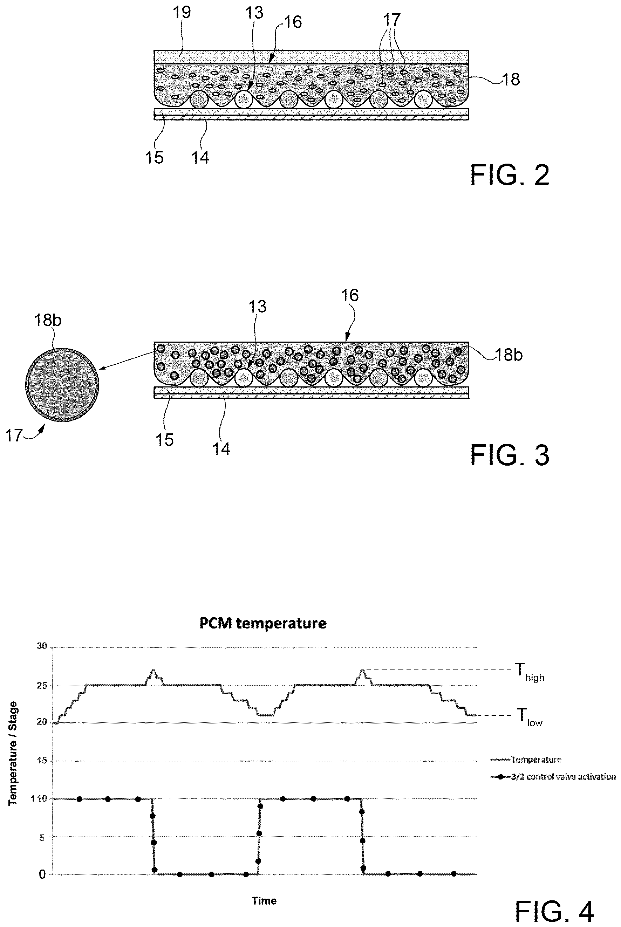

The serpentine 13 is placed over a floor of the cabin an lies in a substantially flat plane (see figures 2 and 3) .

More specifically (with reference to figure 2 showing a first embodiment of the invention) the floor of the cab is realized by a flat metallic wall 14 that is covered with an insulating mat 15. The serpentine 13 is placed over the insulating mat 15 and comprises a number of turns for substantially covering the entire surface of the cabin floor.

A cabin floor mat 16 is placed above the serpentine 13 to cover substantially the entire surface of the cabin floor.

According to the invention the mat 16 contains a plurality of energy-storing elements 17 made of a PCM material that changes its aggregation state from solid to liquid (Phase Change Material) by receiving heating energy from the serpentine 13 thus storing thermal energy; the stored thermal energy in the material is given back towards the exterior of the floor mat 16 when the material changes its aggregation state from liquid to solid. For instance the material may be constituted by paraffin; of course other material may be used for instance salt hydrates. Theoretically also sugar alcohol could be used even if the phase changes at high temperature.

In the example of figure 2, the mat 16 has a fibrous structure (for instance is realized with a not woven fabric), is flat, has a constant thickness and comprises lumps/drops/balls of paraffin integrated in the fibrous structure of the mat 16. The mat 16 is enclosed in a fluid tight protection film 18 so that the paraffin, when in a fluid state, may not leak from the mat 16. A carpet 19 is placed above the mat 16.

In the example of figure 3, the mat 16 has a fibrous structure (for instance is realized with a not woven fabric) and contains a great number of balls of paraffin each ball is surrounded by a fluid tight protection film 18-b so that the balls of paraffin surrounded by respective fluid tight protection films 18-b are integrated in the mat 16 that directly realizes the carpet of the cabin as the fluid tight protection film 18 is not necessary in this embodiment.

According to the invention a number of sensors 20 (figure 1) are placed in different areas of the mat 16 (figure 1) to detect the temperature **Tₘₐₜ** of the cabin floor mat 16. For instance the sensors 20 are designed to measure respective local temperatures (T₁; T₂; T₃; T₄... T_{N}.) of specific areas of the mat 16.

A control device 21 is designed to determine the detected temperature **Tₘₐₜ** based on the local temperatures (T₁; T₂; T₃; T₄... T_{N}.) for instance by means of an average of the local temperatures.

The control device 21 is designed to drive the control valve 11 so that:
The control valve 11 is placed in said second position when said detected temperature **Tₘₐₜ** falls below a first lower limit **T_{low}** so that (see figure 4) a first energy storing phase is realized; during the first energy-storing phase the thermal energy of the fluid flowing in the serpentine 13 is transferred to said energy-storing elements 17 changing their aggregation state from solid to liquid.

The control valve 11 is placed in said first position when said detected temperature **Tₘₐₜ** overcomes a second upper limit **T_{high}** so that (see figure 4) a second energy delivery phase is realized; during the second energy-delivery phase the thermal energy previously stored in the energy-storing elements 17 is supplied to the exterior of the mat when the energy-storing elements 17 change their aggregation state from liquid to solid.

As it can be seen in figure 4, the cyclic repetition of the above first and second phase obtains a good control of the temperature of the mat 16 (and consequently of the interior of the cabin) that moves up and down in a limited interval of temperatures.
The benefits of the invention are the following:
- More comfort for the costumer.
   With the PCM material it is possible to have an constant floor temperature level. The temperature gap between mat temperature (24-26°C) to the coolant temperature (50°-80°C) can be buffered by the PCM.
- Reducing fuel consumption by reducing of the run time of the heating system 1.
   The target is, to reduce the run time of the heating system 1. The serpentine 13 heats up the PCM with a high temperature in a short time. After reaching the Cab temperature, by using also the heating system 4 acting in parallel with the heating system 1, the heating system 1 will turned off and the PCM in the floor map hold the temperature for long time. The off time of the heating system 1 will be much longer than in the conventional auxiliary heating system, and this will be the benefit for the total fuel consumption.

## Claims

1. Heating system for a floor of a cabin of an industrial vehicle, wherein the cabin (3) is provided with an internal air heating system (4) where at least one air-fluid heath exchanger (5) receives from at least one supply conduit (6) a heating fluid from the cooling system (7) of the engine (8) and has at least one return conduct (9) to a return side of the engine cooling system (7),
wherein the heating system comprises:
a control valve (11) interposed along said return conduct (9) and movable between at least - a first position where fluid flows along said return conduct directly to said return side and
- a second position where at least part of the fluid flowing thought the control valve (11) is diverted to an input (13-a) of a serpentine (13) having an output (13-b) for discharging fluid towards the engine cooling system; said serpentine (13) being placed over a floor of the cabin;
a cabin floor mat (16) placed above said serpentine (13) and containing a plurality of energy-storing elements (17) made in a material that changes its aggregation state from solid to liquid by receiving heating energy from the serpentine (13) thus storing thermal energy; said stored thermal energy in the material is given back towards the exterior of the floor mat (16) when the material changes its aggregation state from liquid to solid;
temperature sensor (20) means configured to detect the temperature **Tₘₐₜ** of the cabin floor mat (16);
control means (21) designed to drive said control valve (11);
said control means (21) being designed to set said control valve (11) in said second position when said detected temperature **Tₘₐₜ** falls below a first limit **T_{low}** so that a first energy storing phase is realized; during said first energy-storing phase the thermal energy of the fluid flowing in the serpentine (13) is transferred to said energy-storing elements (17) changing their aggregation state from solid to liquid;
said control means (21) being designed to set said control valve (11) is in said first position when said detected temperature **Tₘₐₜ** overcomes a second upper limit **T_{high}** so that a second energy delivery phase is realized; during the second energy-delivery phase the thermal energy previously stored in the energy-storing elements (17) is supplied to the exterior of the mat (16) when the energy-storing elements (17) change their aggregation state from liquid to solid.

2. Heating system as claimed in claim 1, wherein a plurality of sensors (20) are provided and placed in different areas of the mat (16) to measure the respective local temperature (T₁; T₂; T₃; T₄... T_{N}.) of that area; said control means (21) being designed to set the detected temperature **Tₘₐₜ** based on said local temperatures (T₁; T₂; T₃; T₄... T_{N}.) for instance by means of an average of said local temperatures (T₁; T₂; T₃; T₄... T_{N}.).

3. Heating system as claimed in claim 1 or 2, wherein an energy storing element comprises a ball of said material surrounded by a fluid tight protection film (18-b); said balls of said material surrounded by a fluid tight protection films (18-b) are integrated in the mat realizing the carpet of the cabin.

4. Heating system as claimed in claim 1, wherein said energy storing element comprises a lump of said material integrated in a fibrous structure of said mat (16), for instance a non woven fabric; said mat being enclosed in a fluid tight protection film (18).

5. Heating system as claimed in any of the proceedings claims, wherein said material is paraffin.

## Patentansprüche

1. Heizsystem für einen Boden einer Kabine eines Industriefahrzeuges, wobei die Kabine (3) mit einem internen Luftheizsystem (4) ausgestattet ist, bei dem mindestens ein Luft/Flüssigkeit-Wärmetauscher (5) von mindestens einer Versorgungsleitung (6) ein Heizfluid von dem Kühlsystem (7) des Motors (8) erhält und mindestens eine Rücklaufleitung (9) zu einer Rücklaufseite des Motorkühlsystems (7) umfasst, wobei das Heizsystem umfasst:
ein Steuerventil (11), angeordnet entlang der Rücklaufleitung (9) und umschaltbar zwischen mindestens
- einer ersten Position, in der das Fluid entlang der Rücklaufleitung direkt zur Rücklaufseite fließt, und
- einer zweiten Position, in der mindestens ein Teil des Fluid, welches durch das Steuerventil (11) fließt, umgeleitet wird zu einem Einlass (13-a) einer Schlange (13) mit einem Auslass (13-b), um Fluid ins Motorkühlsystem auszuleiten;
welche Schlange (13) welche über einen Boden der Kabine platziert wird;
eine Kabinenbodenmatte (16), platziert über der Schlange (13) und enthaltend einer Mehrzahl von energiespeichernden Elementen (17), gefertigt aus einem Material, welches seinen Aggregatzustand von fest nach flüssig wechselt, indem es Heizenergie von der Schlange (13) erhält und dadurch thermische Energie speichert;
wobei die thermische Energie in dem Material an die Außenseite der Bodenmatte (16) zurückgeführt wird, wenn das Material seinen Aggregatzustand von flüssig nach fest wechselt;
Temperatursensormittel (20), ausgebildet zur Messung der Temperatur **Tₘₐₜ** der Kabinenbodenmatte (16) zu messen;
Kontrollelemente (21), ausgebildet zur Steuerung des Steuerventils (11);
welche Kontrollelemente (21) ausgebildet sind, um das Steuerventil (11) in die zweite Position zu schalten, wenn die gemessene Temperatur **Tₘₐₜ** unter eine erste Grenze **T_{low}** fällt, sodass eine erste Energiespeicherphase durchgeführt wird; während dieser ersten Energiespeicherphase wird die thermische Energie des Fluids, welches in der Schlange (13) fließt, auf die energiespeichernden Elemente (17) übertragen, wodurch ihr Aggregatzustand von fest nach flüssig wechselt;
und welche Kontrollelemente (21) ausgebildet sind, um das Steuerventil (11) in die erste Position zu schalten, wenn die gemessene Temperatur **Tₘₐₜ** über eine zweite obere Grenze **T_{high}** steigt, sodass eine zweite Energieabgabephase durchgeführt wird; während dieser zweiten Energieabgabephase wird die thermische Energie, welche zuvor in den energiespeichernden Elementen (17) gespeichert wurde, der Außenseite der Matte (16) zugeführt, wenn die energiespeichernden Elemente (17) ihren Aggregatzustand von flüssig nach fest wechseln.

2. Heizsystem nach Anspruch 1, wobei eine Mehrzahl von Sensoren (20) vorgesehen wird und diese in verschiedenen Bereichen der Matte (16) platziert werden, um die jeweilige lokale Temperatur (T₁; T₂; T₃; T₄...T_{N}) des Bereichs zu messen;
wobei die Kontrollelemente (21) dazu ausgebildet sind, die Temperatur **Tₘₐₜ** basierend auf den lokalen Temperaturen (T₁; T₂; T₃; T₄...T_{N}) festzulegen, zum Beispiel auf Grundlage des Mittelwertes der lokalen Temperaturen (T₁; T₂; T₃; T₄...T_{N}).

3. Heizsystem nach den Ansprüchen 1 oder 2, wobei ein energiespeicherndes Element eine Kugel aus dem genannten Material umfasst, umhüllt von einem flüssigkeitsdichtem Film (18-b); welche Kugeln aus diesem Material, umhüllt von einem flüssigkeitsdichten Film (18-b), in die Matte integriert sind, welche den Teppich der Kabine darstellt.

4. Heizsystem nach Anspruch 1, wobei das energiespeichernde Element ein Stück des Materials umfasst, integriert in die faserförmige Struktur der Matte (16), zum Beispiel in ein Vlies; wobei die Matte von einer flüssigkeitsdichten Schicht (18) umhüllt ist.

5. Heizsystem nach einem der vorstehenden Ansprüche, wobei das Material Paraffin ist.

## Revendications

1. Système de chauffage pour un sol d'une cabine d'un véhicule industriel, dans lequel la cabine (3) est munie d'un système de chauffage d'air interne (4) au niveau duquel au moins un échangeur de chaleur air - fluide (5) reçoit, depuis au moins un conduit d'alimentation (6), un fluide de chauffage en provenance du système de refroidissement (7) du moteur (8) et comporte au moins un conduit de retour (9) sur un côté de retour du système de refroidissement de moteur (7), dans lequel le système de chauffage comprend :
une soupape de commande (11) qui est interposée le long dudit conduit de retour (9) et qui peut être déplacée entre au moins
- une première position dans laquelle le fluide s'écoule le long dudit conduit de retour directement jusqu'audit côté de retour et
- une seconde position dans laquelle au moins une partie du fluide qui s'écoule au travers de la soupape de commande (11) est dérivée sur une entrée (13-a) d'un serpentin (13) qui comporte une sortie (13-b) pour décharger le fluide en direction du système de refroidissement du moteur ; ledit serpentin (13) étant placé au-dessus d'un sol de la cabine ;
un tapis de sol de cabine (16) qui est placé au-dessus dudit serpentin (13) et qui contient une pluralité d'éléments de stockage d'énergie (17) qui sont réalisés en un matériau qui fait passer son état d'agrégation de solide à liquide du fait de la réception d'énergie de chauffage en provenance du serpentin (13), d'où ainsi le stockage d'énergie thermique ; ladite énergie thermique stockée dans le matériau est fournie en retour sur l'extérieur du tapis de sol (16) lorsque le matériau fait passer son état d'agrégation de liquide à solide ;
un moyen de capteur de température (20) qui est configuré de manière à ce qu'il détecte la température Tₘₐₜ du tapis de sol de cabine (16) ;
un moyen de commande (21) qui est conçu de manière à ce qu'il pilote ladite soupape de commande (11) ;
ledit moyen de commande (21) étant conçu de manière à ce qu'il établisse ladite soupape de commande (11) dans ladite seconde position lorsque ladite température détectée Tₘₐₜ chute en-deçà d'une première limite T_{low} de telle sorte qu'une première phase de stockage d'énergie soit réalisée ; pendant ladite première phase de stockage d'énergie, l'énergie thermique du fluide qui s'écoule à l'intérieur du serpentin (13) est transférée auxdits éléments de stockage d'énergie (17) qui font passer leur état d'agrégation de solide à liquide ;
ledit moyen de commande (21) étant conçu de manière à ce qu'il établisse ladite soupape de commande (11) dans ladite première position lorsque ladite température détectée Tₘₐₜ est au-delà d'une seconde limite supérieure T_{high} de telle sorte qu'une seconde phase de délivrance d'énergie soit réalisée ; pendant la seconde phase de délivrance d'énergie, l'énergie thermique qui a été stockée au préalable dans les éléments de stockage d'énergie (17) est alimentée sur l'extérieur du tapis (16) lorsque les éléments de stockage d'énergie (17) font passer leur état d'agrégation de liquide à solide.

2. Système de chauffage tel que revendiqué selon la revendication 1, dans lequel une pluralité de capteurs (20) sont prévus et sont placés dans différentes zones du tapis (16) de manière à ce qu'ils mesurent la température locale respective (T₁ ; T₂ ; T₃ ; T₄ ; ... T_{N}) de cette zone ; ledit moyen de commande (21) étant conçu de manière à ce qu'il établisse la température détectée Tₘₐₜ sur la base desdites températures locales (T₁ ; T₂ ; T₃ ; T₄ ; ... T_{N}) par exemple au moyen d'une moyennes desdites températures locales (T₁ ; T₂ ; T₃ ; T₄ ; ... T_{N}) .

3. Système de chauffage tel que revendiqué selon la revendication 1 ou 2, dans lequel un élément de stockage d'énergie comprend une bille dudit matériau qui est entourée par un film de protection étanche au fluide (18-b) ; lesdites billes dudit matériau qui sont entourées par des films de protection étanches au fluide (18-b) sont intégrées dans le tapis qui constitue le revêtement de sol de la cabine.

4. Système de chauffage tel que revendiqué selon la revendication 1, dans lequel lesdits éléments de stockage d'énergie comprennent une masse dudit matériau qui est intégrée à l'intérieur d'une structure fibreuse dudit tapis (16), par exemple un tissu non tissé ; ledit tapis étant renfermé à l'intérieur d'un film de protection étanche au fluide (18).

5. Système de chauffage tel que revendiqué selon l'une quelconque des revendications précédentes, dans lequel ledit matériau est de la paraffine.
